# EUROPEAN PATENT SPECIFICATION

(11) **EP 3 319 193 B1**
(45) Date of publication and mention of the grant of the patent: **15.04.2026**
(21) Application number: 17197144.3
(22) Date of filing: 18.10.2017
(51) Int. Cl.: H02H 3/04, H01H 83/20, H01H 89/00, H02H 3/10

(54) **VIRTUAL ELECTRONIC CIRCUIT BREAKER**
VIRTUELLER ELEKTRONISCHER SCHUTZSCHALTER
DISJONCTEUR DE CIRCUIT ÉLECTRONIQUE VIRTUEL

(30) Priority: 02.11.2016 US 201615341321
(43) Date of publication of application: 09.05.2018
(73) Proprietor: Astronics Advanced Electronic Systems Corp., Kirkland, WA 98034 (US)
(72) Inventor: Vaziri, Massoud, Redmond, WA 98052 (US)
(74) Representative: Manitz Finsterwald Patent- und Rechtsanwaltspartnerschaft mbB

(56) References cited:
- EP-A1- 2 860 837
- US-A- 5 956 222
- US-A1- 2011 222 191

## Description

### FIELD OF THE DISCLOSURE

The subject matter of the present disclosure generally relates to circuit control devices, and more particularly relates to a virtual electronic circuit breaker according to the preamble of claim 1 (see EP 2 860 837 A1) and relates to a method of protecting an electronic circuit

### BACKGROUND OF THE DISCLOSURE

Control devices for circuits are important in many electrical applications. For instance, various circuit breaker designs that are useful in numerous applications have been previously developed and disclosed.

In current aerospace power distribution systems, electrical loads are fed through a thermal circuit breaker and a power relay connected in-series, in order to provide load and wire protection (over-current or "OC") and load On/Off control (switching). Alternatively, a Solid State Power Controller (SSPC) may be used to perform these same functions.

The thermal circuit breaker/power relay solution has a long service history, but this combination can be bulky and labor intensive for installation and trouble shooting. The SSPC solution has also been successfully implemented and operated with favorable service history. However, SSPCs are not cost and/or volume effective for higher power loads, largely due to the fact such applications require a high number of metal-oxide-semiconductor field-effect transistors (MOSFETs).

By example, U.S. Patent No. 6,470,224 to Drake et al. discloses an aircraft power system including a SSPC disposed within a secondary power distribution assembly. Another example is U.S. Patent Application Publication No. 2013/0100567 to Reynolds et al., which discloses a system for protecting electrical power distribution circuits. Yet another example is U.S. Patent Application Publication No. 2013/0050880 to Rozman et al., which discloses a solid state power controller system. The disclosures of Patent No. 6,470,224 and Patent Application Publication Nos. 2013/0100567 and 2013/0050880 are cited. US 5 956 222 A discloses an electronic switch for quick automatic response to current overloads.

EP 2 860 837 A1 discloses a virtual circuit breaker.

US 2011/0222191 A1 discloses a two terminal arc suppressor for protecting switch.

The subject matter of the present disclosure is directed to an improved prevention of arc formation on the relay contacts without any need for upsizing.

The invention is defined in the independent claims. Embodiments of the invention are defined in the dependent claims.

### BRIEF SUMMARY OF THE DISCLOSURE

Disclosed is a virtual electronic circuit breaker (VECB) having an electrical relay and a control circuit according to claim 1. The electrical relay is effective to control the power flow of a power line. The control circuit has a load and wire protection ("OC") detection unit, a microprocessor and a driver. When an overload or short circuit condition is detected, the driver receives a command that the relay should stop the flow of power in the power line and, in return, the relay is caused to shut off power flow in the line, thus preventing or mitigating potential damage and/or harm. The virtual electronic circuit breaker comprises a solid state switch in parallel with the electrical relay, said solid state switch being configured to close before the electrical relay is turned ON and to close before the electrical relay is turned OFF.

There exists many different embodiments of the disclosed system, including many that have additional functionality to that discussed above. For instance, a redundant power supply can allow the relay and control circuit to operate without another source of power. A ground fault interrupt (GFI) detection unit can sense, and begin the response to, a ground fault condition. The microprocessor of the control circuit can actively control the circuit's operation, and in some embodiments, receive and communicate information with other components outside the disclosed system.

The disclosed subject matter presents several advantages over previously available systems and methods.

One advantage of the disclosed subject matter is that it can be utilized with 1-phase Alternating Current (AC), 3-phase AC or Direct Current (DC) power with minor circuit changes.

Another advantage is that utilization of the disclosed subject matter may decrease overall project costs, depending in part on the load rating of any particular implementation.

Yet another advantage of the disclosed subject matter is that it allows for the utilization of conventional, proven components such as off the shelf (OTS) power relays and control circuits. This may, in turn, result in schedule and project cost reductions.

Yet another advantage of the disclosed subject matter is that an over-current rating change only requires a software set-point change, given that the power relay should be compatible for the highest programmable VECB rating.

### BRIEF DESCRIPTION OF THE DRAWINGS

The foregoing summary, preferred embodiments, and other aspects of the subject matter of the present disclosure will be best understood with reference to a detailed description of specific embodiments, which follows, when read in conjunction with the accompanying drawings, in which:
Fig. 1 is a schematic diagram of an embodiment (not claimed but useful for understanding the invention), having a power bus, relay, load and control circuit.
Fig. 2 is a schematic diagram of the embodiment of Fig. 1, having additional features such as a redundant board power supply and GFI detection function.
Fig. 3 is a schematic diagram of an embodiment (not claimed but useful for understanding the invention) having two relays, each connected to a dedicated driver.
Fig. 4 is a diagram of degradation testing.
Fig. 5 is a diagram of waveforms during relay opening.
Fig. 6 is a diagram of waveforms during the contactor commutation period.
Fig. 7 illustrates a circuit board for use during lifecycle testing.
Fig. 8 is a schematic diagram of an embodiment according to the invention, with the solid state switch in parallel with the relay.

Like reference numbers and designations in the various drawings indicate like elements. Arrows in the schematic drawings should be understood to represent logic pathways that are generally indicative of the flow direction of information or logic, and that such arrows do not necessarily represent traditional electrical pathways.

### DETAILED DESCRIPTION OF THE DISCLOSURE

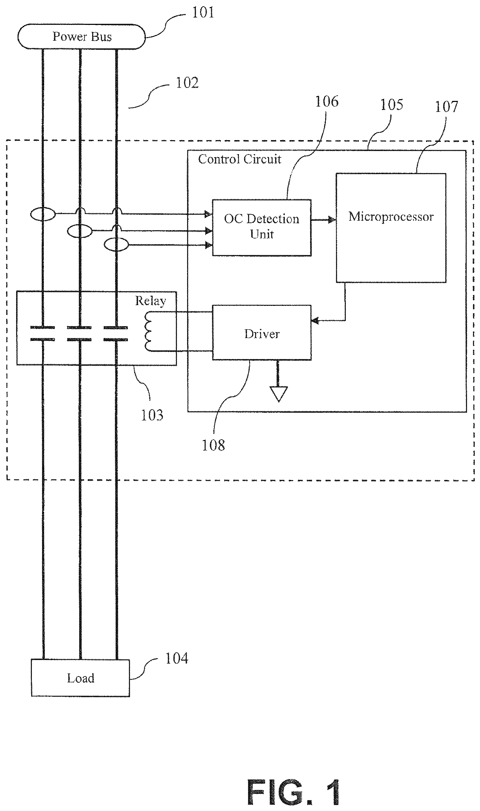

Embodiment illustrated in Figures 1,2,3 and associated passages in the description does not form part of the invention as claimed but is presented as illustrative purposes.

Fig. 1 is a schematic diagram of one embodiment (not claimed but useful for understanding the invention) of the VECB. A power bus **101,** which may be a source of limited power, such as a generator on an aircraft, supplies an amount of power flow along power line **102,** which is in this embodiment carrying 3-phase AC power. It should be understood that the disclosed subject matter can be utilized with 1-phase AC and 3-phase AC power, as well as other power configurations, including without limitation 28VDC and 270VDC. Electrical relay **103** is effective to control this power flow. For example, relay **103** can allow power to flow from power bus **101** to load **104** or, inversely, prevent such flow. Various electrical relays are suitable for use with the disclosed subject matter, including by way of example commercially available OTS units. Control circuit **105** includes OC detection unit **106,** microprocessor **107** and driver **108.** Upon receipt of a deactivation command, driver **108** is effective to cause relay **103** to stop the flow of power in power line **102.** OC detection unit **106** is configured to monitor the power flow in power line **102** with, for example, a current sensor(s). OC detection unit **106** is capable of detecting whether a short circuit or overload condition exists. If one of these conditions is sensed, OC detection unit **106** causes driver **108** to receive a deactivation command, which, in turn, would cause the power flow in power line **102** to be shut off, thereby preventing or limiting the damage or harm that might otherwise be caused by an overload or short circuit condition. Microprocessor **107** is configured to, at a minimum, be capable of receiving input from OC detection unit **106** and sending output to driver **108.** It is understood that microprocessor **107** may perform any number of additional functions, and may be programmable to operate and control the control circuit **105** in a variety of fashions.

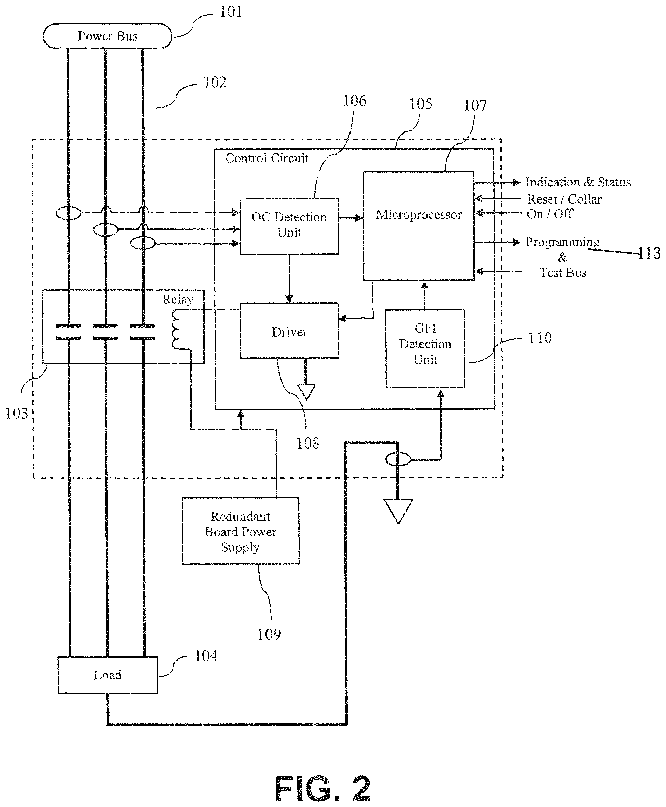

Fig. 2 is a schematic diagram of the embodiment of Fig.1 having additional features and functionality. Redundant Board Power Supply **109** is connected to control circuit **105** and relay **103** and is effective to allow control circuit **105** and relay **103** to operate even when redundant board power supply is the only power source for these units. Such a redundant power supply increases overall system integrity and can help guard against unexpected power loss from other sources. This can be particularly important in applications, such as aircraft, where it is critical that system functionality be maintained even in the event of a loss of primary power.

In the embodiment of Fig. 2 (not claimed but useful for understanding the invention), microprocessor **107** is capable of sending and receiving various information outside of the control circuit. Such functionality may be useful in applications where control of the embodiment system by an outside entity, for instance a flight officer of an aircraft, is advantageous or required. In the embodiment, indication and status information is sent outside of the embodiment system. This information, by way of example, may be recorded, viewed, analyzed or otherwise manipulated. For example, a visual control panel in the cockpit of an aircraft could indicate to a flight officer that the embodiment system is operating effectively. It is understood that there are many human interface schemes, for example, flight deck multi-function displays (MFDs), capable of being utilized with the disclosed subject matter and which will be apparent to those of skill in the art to which the present disclosure pertains.

In the embodiment of Fig. 2, microprocessor **107** is effective to receive "reset," "collar," "on," and "off" commands from outside of the embodiment system. This allows the embodiment system, and thus the power flow in power line **102,** to be controlled remotely, either automatically or by a human operator. For instance, upon receipt of an "off" command by the microprocessor, the microprocessor may cause driver **108** to receive a deactivation command and thereby cause relay **103** to shut off power flow in power line **102.**

In the embodiment of Fig. 2, microprocessor **107** is effective to communicate with a programming and test bus **113.** This allows for the embodiment virtual electronic circuit breaker to be tested to ensure correct operation, and in certain embodiments, for the circuit to be programmed with various settings and/or for various tasks. For example, the threshold for determining that an overload condition existed in the circuit could be raised, to for example, account for load equipment with higher current demand that require larger wire gauge that are designed for higher overloads in power line **102.** It should be understood that microprocessor **107** may receive input from various input devices, such as control panels, keyboards, etc.

The embodiment depicted by Fig. 2 includes GFI detection unit **110.** In the particular embodiment, the GFI detection unit **110** is integrated with control circuit **105,** but could optionally be not integrated. GFI detection unit **110** is effective to, when it senses that a ground fault condition has occurred, communicate to the microprocessor that such a condition has occurred. This allows the embodiment system to detect and react to ground fault conditions. In an embodiment, an arc fault detection and protection algorithm can be programmed into the microprocessor. In another embodiment, GFI protection can be added by including an additional current sensor (i.e., current transformer or hall effect sensor).

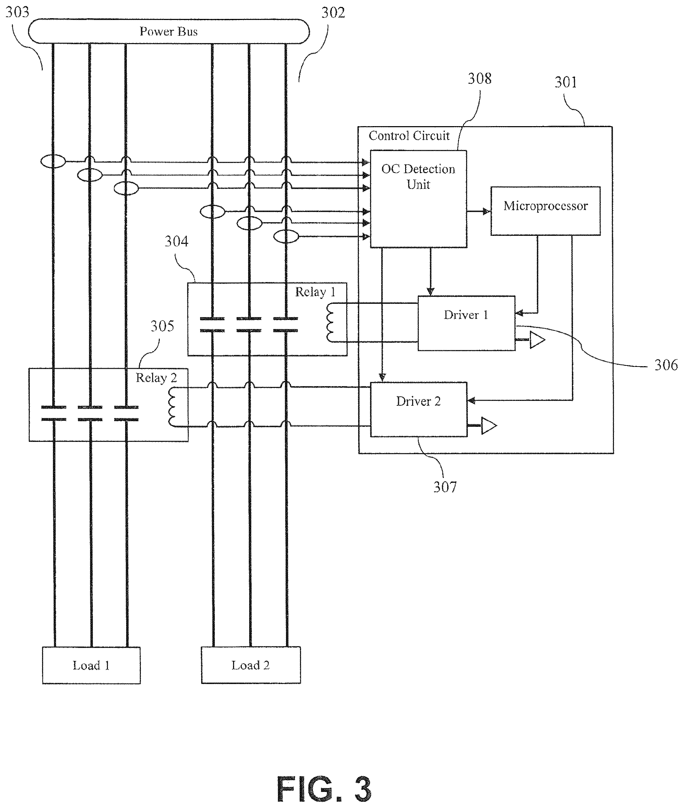

Fig. 3 is a schematic depiction of an embodiment (not claimed but useful for understanding the invention) in which a single control circuit **301** operates to control the power flow in both first power line **302** and second power line **303.** In the embodiment, first relay **304** is effective to control the flow of power in first power line **302.** Similarly, second relay **305** is effective to control the flow of power in second power line **303.** First driver **306** is effective to cause first relay **304** to stop the flow of power in first power line **302** upon receipt by first driver **306** of a deactivation command. Similarly, second driver **307** is effective to cause second relay **305** to stop the flow of power in second power line **303** upon receipt by second driver **307** of a deactivation command. OC detection unit **308** monitors both first power line **302** and second power line **303** and is effective to cause first driver **306** or second driver **307** to receive a deactivation command if a current overflow or short circuit condition is detected in first power line **302** or second power line **303,** respectively. As illustrated by the embodiment depicted by Fig. 3, components utilized in practicing the disclosed subject matter need not have one-to-one relationships with one another or exist only in single units.

In one embodiment, relay **103** is connected in parallel with a solid state switch (SSSW). The SSSW is configured to close before the relay **103** activates. Thus, before the relay **103** opens or closes, the SSSW closes, which in turn prevents arc formation on the relay contacts. Without the SSSW connected in parallel with the relay **103** and being configured to close before the relay activates, the relay **103** would otherwise need to be upsized significantly to prevent arc formation. However, the use of a relay in parallel with the SSSW prevents arc formation that would otherwise results from the high voltage.

The invention utilizes the Tyco/Axicom V23079 relay (manufactured by TE Connectivity Ltd. of Schaffhausen, Switzerland), which is a standard telecom relay with a switching current of 5 Amps and two changeover contacts formed from silver nickel and gold-covered. The V23079 relay is rate for a 2 Amp continuous current. Product literature accompanying the relay recommends to never parallel relay contacts to double the contact rating.

In this embodiment, the relay **103** includes two sets of contacts. Each set of relay contacts is initially rated for 2 Amps maximum continuous current. However, using the aforementioned inventive feature of connecting the relay in parallel with the SSSW, total continuous current is able to run at up to 4 Amps per contact (8 Amps per contact set). Thus, use of the parallel formation of SSSW with relay **103** allows for a contactor to be utilized at twice the specification rating, which allows for a reduction of the relay size otherwise required. It should be noted that the invention additionally contemplates current flow of 5 Amps per contact, up to 10 Amps per set.

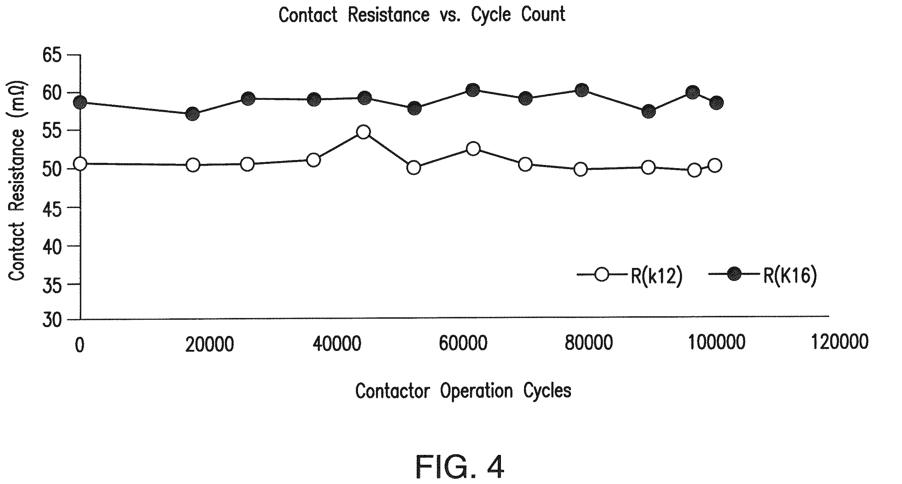

The invention performed testing to increase the maximum current to exceed double the rated current by paralleling relay contacts with a SSSW. Relay degradation was determined by analyzing contact resistance, with a measurement taken before each testing series, and then again at points during testing. Utilizing the inventive device, contact resistance did not change during testing, indicating minimal relay degradation. The testing results are in FIG. 4.

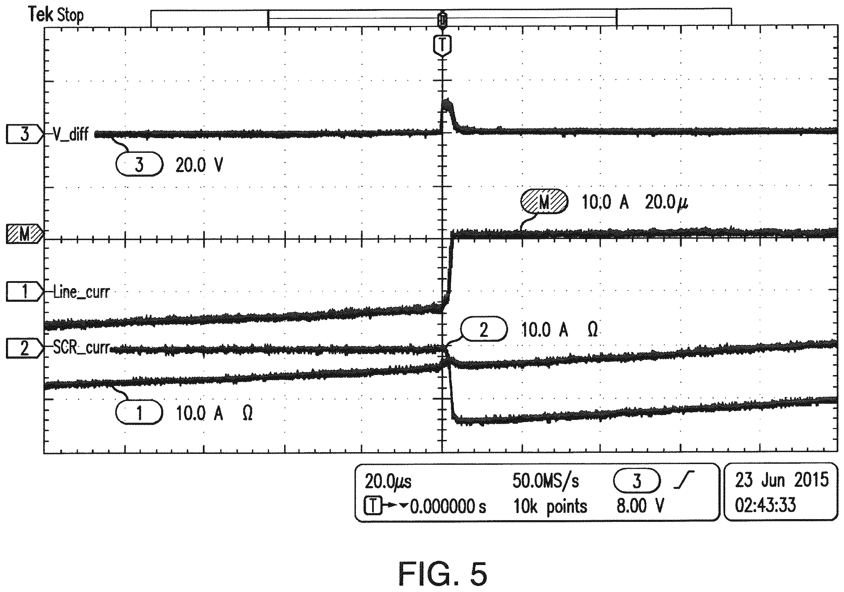

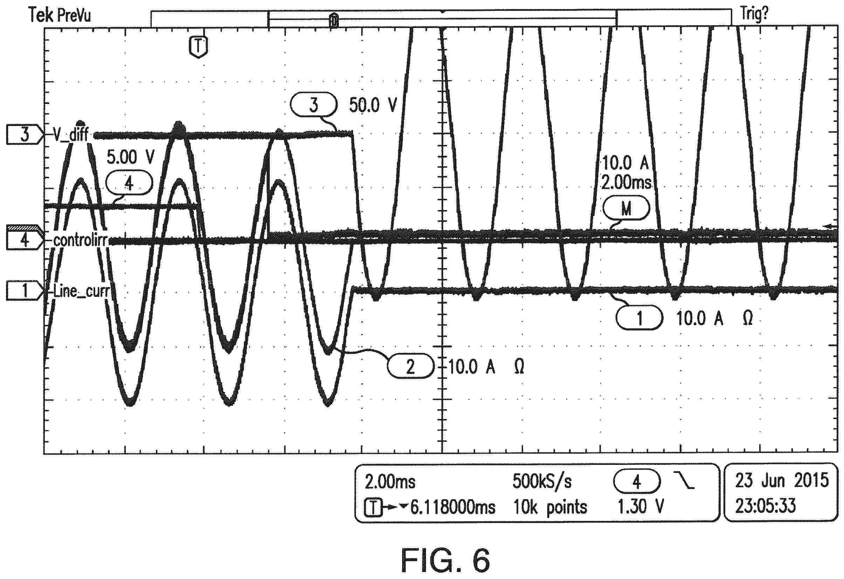

The testing included capturing waveforms to provide details about the contactor commutation process. The waveforms are illustrated in FIGS. 5-6. FIG. 5 illustrates waveforms of a zoomed-in period of the relay opening, and the transition of current from the relay to the silicon-controlled rectifier (SCR). FIG. 6 illustrates a wider view of the entire commutation period.

As shown in FIG. 5, CH1 is the line during the commutation process. CH2 is the SCR current, and CHM is the relay current. CH3 is the voltage across the relay at 20V/div. FIG. 5 illustrates that the transition of current from relay to SCR occurs quickly, in 1-2 microseconds, and that voltage across the relay never rise to a potential voltage for arcs to occur.

FIG. 6 illustrates CH4 as the control input to open the contactor. The contactor does not open until the relay starts to open (i.e., after a delay). As shown, the current quickly transfers from the relay (CHM) to the SCR (CH2), and then terminates within another two microseconds on a current zero crossing.

The inventive device can therefore provide a reliable contactor that can sustain in excess of 1,500,000 cycles of contact cycles using a small, inexpensive relay.

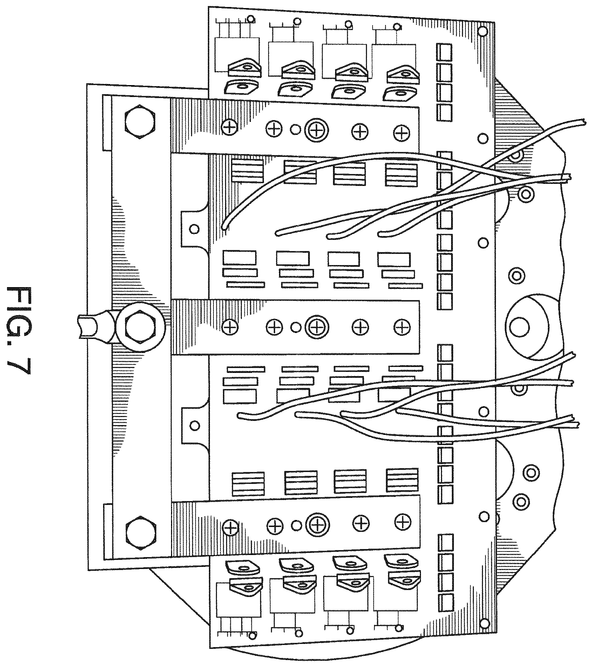

FIG. 7 illustrates an exemplary circuit board lifecycle test board, showing a bus contactor and load connections, used to test the relay.

The inventive relay **103** in accordance with this embodiment allows for switching of AC currents up to 15 Amps on a 115VAC, 400Hz power bus. Control circuit **105** enables or closes an opto-isolator, and then opens relay **103.** The circuit **105** controls the relay opening asynchronously with the AC bus waveform, allowing the relay to open under minimal load stress due to the opto-isolator having zero-cross detection features. Contactors do not open until the relay begins to open (usually a delay of about 2 microseconds).

Once the relay **103** begins to open, voltage across the relay causes a SCR in parallel with the relay **103** to trigger. This causes current going through the relay to transfer to the SCR, causing the relay **103** to then complete its opening with no arc formation. The SCR then opens at the next current zero. It should be noted that transition of current from relay **103** to SCR occurs very quickly, such as 1-2 microseconds or a similar timeframe, thereby not allowing the voltage across the relay to rise to an arc potential. This avoids any damage to the contactors.

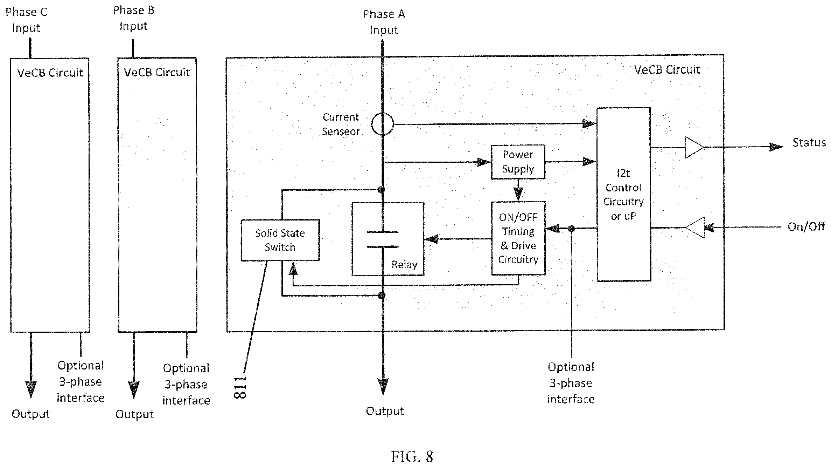

Fig. 8 illustrates an exemplary embodiment, with the circuit breaker including a solid-state switch **811** in parallel with the relay. The inventive device in this embodiment offers the same functionality as a MOSFET-based electronic circuit breaker. In accordance with the invention, the device can be configured for 1-phase, 2-phase or 3-phase operations. Moreover, the device utilizes inexpensive, commercial relays, significantly lowering the cost per channel as compared to full solid-state electronic circuit breakers.

As illustrated, a solid state switch **811** is in parallel with the relay, which prevents arc formation during opening and closing of the relay. The prevention of arc formation increases longevity of the relay, with an expected lifespan of 100 million cycles at its intended current level.

The device allows for the channel rating to be scaled up by utilizing multiple relays in parallel, as well as a higher current solid state switch, while still remaining cost competitive. Thus, a 35 Amp virtual electronic circuit breaker remains cost-effective, with the equivalent function of a thermal circuit and a relay in series, whereas a 35 Amp solid state electronic circuit breaker is cost-prohibitive. Further, the channel I2t rating can be changed utilizing either simple discrete components, or a microprocessor set point.

It should be understood that various components of the disclosed subject matter may communicate with one another in various manners. For instance, components may communicate with one another via a wire or, alternatively, wirelessly and by electrical signals or via digital information. It is noted that PWB may be utilized in the construction of many embodiments.

Although the disclosed subject matter has been described and illustrated with respect to embodiments thereof, it should be understood by those skilled in the art that features of the disclosed embodiments can be combined, rearranged, etc., to produce additional embodiments within the scope of the invention, and that various other changes, omissions, and additions may be made therein and thereto, without departing from the scope of the present invention.

## Claims

1. A virtual electronic circuit breaker, comprising:
an electrical relay (103) effective to control an amount of power flow;
a control circuit (105), having a single Load and Wire Protection ("OC") detection unit (106), a microprocessor (107) and a driver (108);
said driver (108) effective to cause said relay (103) to stop said power flow upon receipt by the driver of a deactivation command;
said single OC detection unit (106) configured to both monitor said power flow and effective to cause said driver (108) to receive the deactivation command in response to a detection, by said single OC detection unit (106), that an overload condition exists; and
said microprocessor (107) configured to be capable of receiving input from said single OC detection unit (106), sending output to said driver (108), and configured to be capable of receiving a "reset" command, a "collar" command, an "on" command, and an "off" command from said control circuit (105);
**characterized by**
a solid state switch (811) in parallel with the electrical relay (103), said solid state switch (811) being configured to close before the electrical relay (103) is turned ON and to close before the electrical relay (103) is turned OFF.

2. The virtual electronic circuit breaker of claim 1, wherein said power flow is selected from the group consisting of 1-phase alternating current (AC), 3-phase AC and direct current (DC).

3. The virtual electronic circuit breaker of claim 2, wherein power flow is 1-phase AC and said virtual electronic circuit breaker is located on an aircraft.

4. The virtual electronic circuit breaker of claim 3, wherein said microprocessor (107) is effective to send information to an aircraft cockpit.

5. The virtual electronic circuit breaker of claim 1, wherein said microprocessor (107) is effective to cause said driver (108) to receive the deactivation command upon receipt by the microprocessor (107) of an "off" command.

6. The virtual electronic circuit breaker of claim 1, wherein said microprocessor (107) is effective to communicate with a programming and test bus (113).

7. The virtual electronic circuit breaker of claim 1, further comprising a redundant source of power (109) effective to allow said control circuit (105) and said relay (103) to operate while only receiving power from said redundant source of power (109).

8. The virtual electronic circuit breaker of claim 1, further comprising a ground fault interruption (GFI) detection unit (110).

9. The virtual electronic circuit breaker of claim 8, wherein said GFI detection unit (110) is effective to, when the GFI detection unit (110) senses that a ground fault condition has occurred, communicate to said microprocessor (107) that a ground fault condition has occurred.

10. The virtual electronic circuit breaker of claim 9, wherein said GFI detection unit (110) is integrated with said control circuit (105).

11. A method of protecting an electronic circuit, **characterized by** the steps of:
providing a power flow;
providing an electrical relay (103) effective to control said amount of power flow;
providing a solid switch (811) in parallel with the electrical relay (103), said solid state switch (811) being configured to close before the electrical relay (103) is turned ON and to close before the electrical relay (103) is turned OFF;
providing a control circuit (105), having a single Load and Wire Protection ("OC") detection unit (106), a microprocessor (107) and a driver (108), wherein said driver (108) is effective to cause said relay (103) to stop said power flow upon receipt by the driver of a deactivation command, and wherein said microprocessor (107) is configured to be capable of receiving input from said single OC detection unit (106), sending output to said driver (108), and configured to be capable of receiving a "reset" command, a "collar" command, an "on" command, and an "off" command from the control circuit (105);
monitoring said power flow utilizing said single OC detection unit (106); and
causing said driver (108) to receive the deactivation command when an overload condition is sensed.

12. The method of claim 11, wherein said microprocessor (107) is effective to receive commands from, and send information to, outside said control circuit (105).

13. The method of claim 12, wherein said microprocessor (107) is effective to cause said driver (108) to receive the deactivation command upon receipt by the microprocessor of an "off" command.

## Patentansprüche

1. Virtueller elektronischer Schutzschalter, umfassend:
ein elektrisches Relais (103), das wirksam ist, um eine Leistungsflussmenge zu steuern;
eine Steuerschaltung (105), die eine einzelne Last- und Drahtschutz-("OC")-Detektionseinheit (106), einen Mikroprozessor (107) und einen Treiber (108) aufweist;
wobei der Treiber (108) wirksam ist, um das Relais (103) zu veranlassen, den Leistungsfluss bei Empfang eines Deaktivierungsbefehls durch den Treiber zu stoppen;
wobei die einzelne OC-Detektionseinheit (106) konfiguriert ist, um sowohl den Leistungsfluss zu überwachen als auch wirksam ist, um den Treiber (108) zu veranlassen, den Deaktivierungsbefehl als Reaktion auf eine Detektion durch die einzelne OC-Detektionseinheit (106), dass ein Überlastzustand vorliegt, zu empfangen; und
wobei der Mikroprozessor (107) konfiguriert ist, um in der Lage zu sein, eine Eingabe von der einzelnen OC-Detektionseinheit (106) zu empfangen, eine Ausgabe an den Treiber (108) zu senden, und konfiguriert ist, um in der Lage zu sein, einen "Reset"-Befehl, einen "Collar"-Befehl, einen "On"-Befehl und einen "Off"-Befehl von der Steuerschaltung (105) zu empfangen;
**gekennzeichnet durch**
einen Festkörperschalter (811) parallel zu dem elektrischen Relais (103), wobei der Festkörperschalter (811) konfiguriert ist, um zu schließen, bevor das elektrische Relais (103) in den On-Zustand geschaltet wird, und um zu schließen, bevor das elektrische Relais (103) in den Off-Zustand geschaltet wird.

2. Virtueller elektronischer Schutzschalter nach Anspruch 1, wobei der Leistungsfluss aus der Gruppe ausgewählt ist, die aus 1-phasigem Wechselstrom (AC), 3-phasigem Wechselstrom (AC) und 3-phasigem Gleichstrom (DC) besteht.

3. Virtueller elektronischer Schutzschalter nach Anspruch 2, wobei der Leistungsfluss 1-phasiger AC ist und sich der virtuelle elektronische Schutzschalter an einem Flugzeug befindet.

4. Virtueller elektronischer Schutzschalter nach Anspruch 3, wobei der Mikroprozessor (107) wirksam ist, um Informationen an ein Flugzeugcockpit zu senden.

5. Virtueller elektronischer Schutzschalter nach Anspruch 1, wobei der Mikroprozessor (107) wirksam ist, um den Treiber (108) zu veranlassen, den Deaktivierungsbefehl bei Empfang eines "Off"-Befehls durch den Mikroprozessor (107) zu empfangen.

6. Virtueller elektronischer Schutzschalter nach Anspruch 1, wobei der Mikroprozessor (107) wirksam ist, um mit einem Programmier- und Testbus (113) zu kommunizieren.

7. Virtueller elektronischer Schutzschalter nach Anspruch 1, ferner umfassend eine redundante Leistungsquelle (109), die wirksam ist, um der Steuerschaltung (105) und dem Relais (103) zu ermöglichen, zu arbeiten, während sie nur Leistung von der redundanten Leistungsquelle (109) empfangen.

8. Virtueller elektronischer Schutzschalter nach Anspruch 1, ferner umfassend eine Erdungsfehlerunterbrechungs (GFI)-Detektionseinheit (110).

9. Virtueller elektronischer Schutzschalter nach Anspruch 8, wobei die GFI-Detektionseinheit (110) wirksam ist, um, wenn die GFI-Detektionseinheit (110) erfasst, dass ein Erdungsfehlerzustand aufgetreten ist, an den Mikroprozessor (107) zu kommunizieren, dass ein Erdungsfehlerzustand aufgetreten ist.

10. Virtueller elektronischer Schutzschalter nach Anspruch 9, wobei die GFI-Detektionseinheit (110) in die Steuerschaltung (105) integriert ist.

11. Verfahren zum Schützen einer elektronischen Schaltung, **gekennzeichnet durch** die folgenden Schritte:
Bereitstellen eines Leistungsflusses;
Bereitstellen eines elektrischen Relais (103), das wirksam ist, um die Leistungsflussmenge zu steuern;
Bereitstellen eines Festkörperschalters (811) parallel zu dem elektrischen Relais (103), wobei der Festkörperschalter (811) konfiguriert ist, um zu schließen, bevor das elektrische Relais (103) in den On-Zustand geschaltet wird, und um zu schließen, bevor das elektrische Relais (103) in den Off-Zustand geschaltet wird;
Bereitstellen einer Steuerschaltung (105), die eine einzelne Last- und Drahtschutz- ("OC")-Detektionseinheit (106), einen Mikroprozessor (107) und einen Treiber (108) aufweist, wobei der Treiber (108) wirksam ist, um das Relais (103) zu veranlassen, den Leistungsfluss bei Empfang eines Deaktivierungsbefehls durch den Treiber zu stoppen, und wobei der Mikroprozessor (107) konfiguriert ist, um in der Lage zu sein, eine Eingabe von der einzelnen OC-Detektionseinheit (106) zu empfangen, eine Ausgabe an den Treiber (108) zu senden, und konfiguriert ist, um in der Lage zu sein, einen "Reset"-Befehl, einen "Collar"-Befehl, einen "On"-Befehl und einen "Off"-Befehl von der Steuerschaltung (105) zu empfangen;
Überwachen des Leistungsflusses unter Verwendung der einzelnen OC-Detektionseinheit (106); und
Veranlassen des Treibers (108), den Deaktivierungsbefehl zu empfangen, wenn ein Überlastzustand erfasst wird.

12. Verfahren nach Anspruch 11, wobei der Mikroprozessor (107) wirksam ist, um Befehle von außerhalb der Steuerschaltung (105) zu empfangen und Informationen an außerhalb der Steuerschaltung (105) zu senden.

13. Verfahren nach Anspruch 12, wobei der Mikroprozessor (107) wirksam ist, um den Treiber (108) zu veranlassen, den Deaktivierungsbefehl bei Empfang eines "Off"-Befehls durch den Mikroprozessor zu empfangen.

## Revendications

1. Disjoncteur électronique virtuel, comprenant :
un relais électrique (103) efficace pour commander un flux d'énergie ;
un circuit de commande (105) comportant une unique unité de détection de surintensité (« OC ») (106), un microprocesseur (107) et un circuit d'attaque (108) ;
ledit circuit d'attaque (108) étant efficace pour amener ledit relais (103) à arrêter ledit flux d'énergie lors de la réception par le circuit d'attaque d'un ordre de désactivation ;
ladite unique unité de détection OC (106) étant configurée à la fois pour surveiller ledit flux d'énergie et pour amener ledit circuit d'attaque (108) à recevoir l'ordre de désactivation en réponse à une détection, par ladite unité unique de détection OC (106), de l'existence d'une condition de surcharge ; et
ledit microprocesseur (107) étant configuré pour être capable de recevoir une entrée provenant de ladite unique unité de détection OC (106), d'envoyer une sortie audit circuit d'attaque (108), et étant configuré pour être capable de recevoir un ordre « reset », un ordre « collar », un ordre « on » et un ordre « off » dudit circuit de commande (105) ;
**caractérisé par**
un commutateur à semi-conducteurs (811) en parallèle avec le relais électrique (103), ledit commutateur à semi-conducteurs (811) étant configuré pour se fermer avant que le relais électrique (103) ne soit activé (ON) et pour se fermer avant que le relais électrique (103) ne soit désactivé (OFF).

2. Disjoncteur électronique virtuel selon la revendication 1, dans lequel ledit flux d'énergie est sélectionné parmi le groupe comprenant le courant alternatif monophasé (AC), le courant alternatif triphasé et le courant continu (DC).

3. Disjoncteur électronique virtuel selon la revendication 2, dans lequel le flux d'énergie est un courant alternatif monophasé et ledit disjoncteur électronique virtuel est situé sur un avion.

4. Disjoncteur électronique virtuel selon la revendication 3, dans lequel ledit microprocesseur (107) est efficace pour envoyer des informations à un cockpit d'avion.

5. Disjoncteur électronique virtuel selon la revendication 1, dans lequel ledit microprocesseur (107) est efficace pour amener ledit circuit d'attaque (108) à recevoir l'ordre de désactivation lors de la réception par le microprocesseur (107) d'un ordre « off ».

6. Disjoncteur électronique virtuel selon la revendication 1, dans lequel ledit microprocesseur (107) est efficace pour communiquer avec un bus de programmation et de test (113).

7. Disjoncteur électronique virtuel selon la revendication 1, comprenant en outre une source d'énergie redondante (109) permettant audit circuit de commande (105) et audit relais (103) de fonctionner en recevant uniquement de l'énergie provenant de ladite source d'énergie redondante (109).

8. Disjoncteur électronique virtuel selon la revendication 1, comprenant en outre une unité de détection d'interruption en cas de défaut à la terre (GFI) (110).

9. Disjoncteur électronique virtuel selon la revendication 8, dans lequel ladite unité de détection GFI (110) est efficace pour, lorsque l'unité de détection GFI (110) détecte qu'une condition de défaut à la terre s'est produite, communiquer audit microprocesseur (107) qu'une condition de défaut à la terre s'est produite.

10. Disjoncteur électronique virtuel selon la revendication 9, dans lequel ladite unité de détection GFI (110) est intégrée audit circuit de commande (105).

11. Procédé de protection d'un circuit électronique, **caractérisé par** les étapes consistant à :
fournir un flux d'énergie ;
fournir un relais électrique (103) efficace pour commander ladite quantité de flux d'énergie ;
fournir un commutateur à semi-conducteurs (811) en parallèle avec le relais électrique (103), ledit commutateur à semi-conducteurs (811) étant configuré pour se fermer avant que le relais électrique (103) ne soit activé (ON) et pour se fermer avant que le relais électrique (103) ne soit désactivé (OFF) ;
fournir un circuit de commande (105) comportant une unique unité de détection de surintensité (« OC ») (106), un microprocesseur (107) et un circuit d'attaque (108), dans lequel ledit circuit d'attaque (108) est efficace pour amener ledit relais (103) à arrêter ledit flux d'énergie lors de la réception par le circuit d'attaque d'un ordre de désactivation, et dans lequel ledit microprocesseur (107) est configuré pour être capable de recevoir une entrée provenant de ladite unique unité de détection OC (106), envoyer une sortie audit circuit d'attaque (108), et configuré pour être capable de recevoir un ordre « reset », un ordre « collar », un ordre « on » et un ordre « off » du circuit de commande (105) ;
surveiller ledit flux d'énergie en utilisant ladite unique unité de détection OC (106) ; et
amener ledit circuit d'attaque (108) à recevoir l'ordre de désactivation lorsqu'une condition de surcharge est détectée.

12. Procédé selon la revendication 11, dans lequel ledit microprocesseur (107) est efficace pour recevoir des ordres provenant de l'extérieur dudit circuit de commande (105) et pour envoyer des informations vers l'extérieur dudit circuit de commande (105).

13. Procédé selon la revendication 12, dans lequel ledit microprocesseur (107) est efficace pour amener ledit circuit d'attaque (108) à recevoir l'ordre de désactivation lors de la réception par le microprocesseur d'un ordre « off ».
